# EUROPEAN PATENT APPLICATION

(11) **EP 3 748 913 A1**
(43) Date of publication of application: **09.12.2020**
(21) Application number: 19747009.9
(22) Date of filing: 25.01.2019
(51) Int. Cl.: H04L 12/26

(54) **LINK BANDWIDTH UTILIZATION RATE ACQUISITION METHOD AND DEVICE, AND TERMINAL**

(30) Priority: 01.02.2018 CN 201810103312
(71) Applicant: ZTE Corporation, shenzhen Guangdong 518057 (CN)
(72) Inventor: ZHANG, Hefeng, Shenzhen, Guangdong 518057 (CN); ZHANG, Xianzhen, Shenzhen, Guangdong 518057 (CN); HE, Jiangquan, Shenzhen, Guangdong 518057 (CN); ZHANG, Lei, Shenzhen, Guangdong 518057 (CN)
(74) Representative: Regimbeau
(86) International application number: PCT/CN2019/073122
(87) International publication number: WO 2019/149143

(57) **Abstract**

Provided are a method and device for acquiring a link bandwidth utilization rate, and a terminal. The method includes: acquiring traffic data in a link; determining, according to the traffic data, a traffic category of traffic; and calculating, according to a pre-configured bandwidth check rule and the determined traffic category, the link bandwidth utilization rate.

## Description

### CROSS-REFERENCES TO RELATED APPLICATIONS

The present application is based on and claims priority to Chinese patent application No. 201810103312.3 filed on February 1, 2018, disclosure of which is incorporated herein by reference in its entirety.

### TECHNICAL FIELD

The present application relates to the field of communications and, optionally, to a method and device for acquiring a link bandwidth utilization rate, and a terminal.

### BACKGROUND

At present, an operator has various categories of network traffic which are increasingly complicated. Bandwidth is allocated unreasonably to configured traffic in different configuration scenarios, and it is difficult to perform effective counting and checking on occupied traffic bandwidth in a manual manner. For the problem of congestion and a low network bandwidth utilization rate due to unreasonable traffic bandwidth allocation, the existing automatic bandwidth statistics are employed only in a configuration scenario where a committed information rate (CIR) exists in a tunnel and a pseudo-wire. In a configuration scenario where the CIR does not exist in the tunnel and the pseudo-wire, an existing network adopts a manual means for calculations and checks, which requires a large workload, has low efficiency, and cannot achieve effective pre-determination, ensure accuracy, achieve early warning of a link with an excessive traffic bandwidth utilization rate, improve check efficiency of network traffic bandwidth occupancy, and improve a network traffic bandwidth utilization rate, so that the stability of network traffic operation is affected.

### SUMMARY

The embodiments of the present application provide a method and device for acquiring a link bandwidth utilization rate, and a terminal, which can improve the stability of network traffic operation.

The embodiments of the present application provide a method for acquiring a link bandwidth utilization rate. The method includes steps described below.

Traffic data in a link is acquired.

A traffic category of traffic is determined according to the traffic data.

The link bandwidth utilization rate is calculated according to a pre-configured bandwidth check rule and the determined traffic category.

The embodiments of the present application further provide a device for acquiring a link bandwidth utilization rate. The device includes an acquisition module, a traffic identification module, and a counting and check module.

The acquisition module is configured to acquire traffic data in a link.

The traffic identification module is configured to determine, according to the traffic data, a traffic category of traffic.

The counting and check module is configured to calculate, according to a pre-configured bandwidth check rule and the traffic category determined by the traffic identification module, the link bandwidth utilization rate.

The embodiments of the present application further provide a terminal, including a memory, a processor, and a computer program stored in the memory and executable by the processor, where the processor, when executing the computer program, implements steps of any one method for acquiring a link bandwidth utilization rate described above.

The embodiments of the present application further provide a computer-readable storage medium, storing a computer program, where the computer program, when executed by a processor, implements steps of any one method for acquiring a link bandwidth utilization rate described above.

With the technical solutions in the embodiments of the present application, a traffic data in a link is acquired; a traffic category of traffic is determined according to the traffic data; and a link bandwidth utilization rate is calculated according to a pre-configured bandwidth check rule and the determined traffic category. With the technical solutions in the embodiments of the present application, the traffic category can be automatically identified, and traffic bandwidth occupancy of links in a network can be accurately and timely evaluated, so that a function of early warning of a link with an excessive traffic bandwidth utilization rate can be achieved, saving manpower, improving check efficiency of network traffic bandwidth occupancy, improving a network traffic bandwidth utilization rate, and improving the stability of network traffic operation.

### BRIEF DESCRIPTION OF DRAWINGS

The drawings in the embodiments of the present application are described below. The drawings in the embodiments are used for a further understanding of the present application and for explaining the embodiments of the present application in conjunction with the description, which do not limit the scope of the embodiments of the present application.
FIG. 1 is a flowchart of a method for acquiring a link bandwidth utilization rate according to an embodiment of the present application.
FIG. 2 is a flowchart of another method for acquiring a link bandwidth utilization rate according to an embodiment of the present application.
FIG. 3 is a flowchart of another method for acquiring a link bandwidth utilization rate according to an embodiment of the present application.
FIG. 4 is a structural diagram of a device for acquiring a link bandwidth utilization rate according to an embodiment of the present application.

### DETAILED DESCRIPTION

To facilitate a better understanding by those skilled in the art, a further description of the present application is provided below with reference to the drawings. The further description below is not intended to limit the scope of the present application. It is to be noted that if not in collision, the embodiments and various methods therein in the present application may be combined with each other.

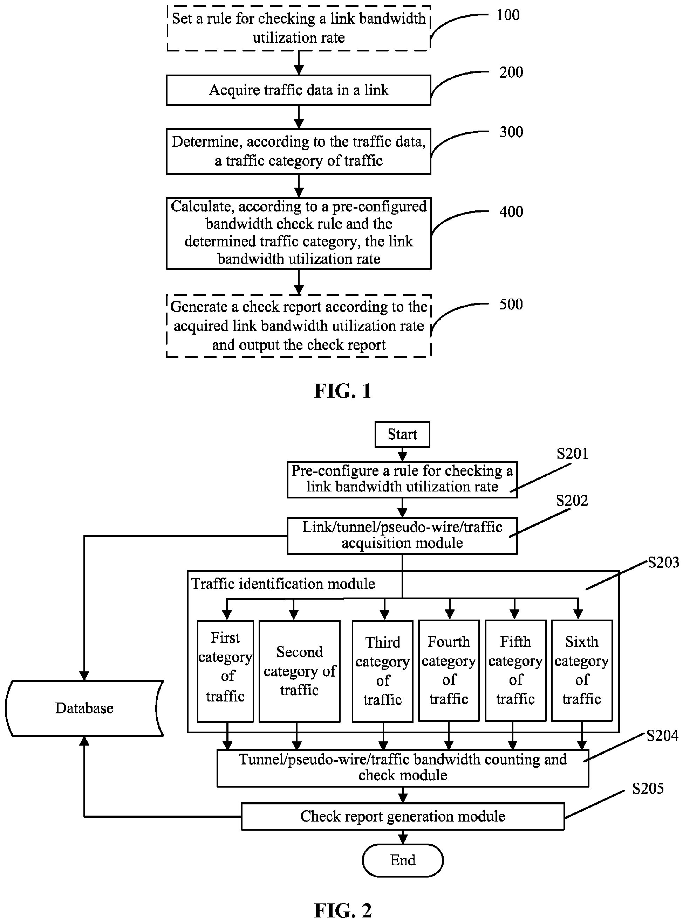

Referring to FIG. 1, the present application provides a method for acquiring a link bandwidth utilization rate. The method includes steps described below.

In step 200, traffic data in a link is acquired.

In step 300, a traffic category of traffic is determined according to the traffic data.

In step 400, the link bandwidth utilization rate is calculated according to a pre-configured bandwidth check rule and the determined traffic category.

In the embodiment of the present application, in step 300, the traffic category of the traffic is determined according to the traffic data includes: determining whether the traffic is one of preset traffic categories, and counting the number of pieces of traffic for the traffic category. The number of pieces of traffic for part or all of traffic categories is counted. As an example, numbers of pieces of traffic for a first category of traffic, a second category of traffic, a third category of traffic, a fourth category of traffic, and a fifth category of traffic are counted. A sixth category of traffic and a seventh category of traffic are not included in a traffic calculation range, and thus corresponding numbers of pieces of traffic may not be counted.

The preset traffic categories include at least one of categories listed below.

The first category of traffic represents traffic for which a tunnel in a service layer is configured with a CIR.

The second category of traffic represents traffic for which the tunnel in a service layer is not configured with a CIR, and a corresponding pseudo-wire is configured with a pseudo-wire CIR.

The third category of traffic represents time division multiplexing (TDM) traffic for which neither the tunnel in a service layer nor the pseudo-wire in a service layer is configured with the CIR.

The fourth category of traffic represents Ethernet traffic for which an A or Z endpoint of a pseudo-wire/a tunnel in a service layer which are not configured with CIRs is a real physical port.

The fifth category of traffic represents Ethernet traffic for which an A or Z endpoint of a pseudo-wire/a tunnel in a service layer which are not configured with CIRs is a virtual interface or a virtual sub-interface, wherein the Ethernet traffic associates with layer 3 virtual private network, L3VPN, traffic having a user tag not including a set value.

The sixth category of traffic represents Ethernet traffic for which an A or Z endpoint of a pseudo-wire/a tunnel in a service layer which are not configured with CIRs is a virtual interface or a virtual sub-interface, wherein the Ethernet traffic associates with L3VPN traffic having a user tag including a set value.

The seventh category of traffic represents other traffic for which neither the tunnel in a service layer nor a pseudo-wire in a service layer is configured with the CIR.

In the preceding example, an example in which the traffic category includes seven traffic categories is used for description. In addition, the traffic category may also be a combination of part of the seven traffic categories described above.

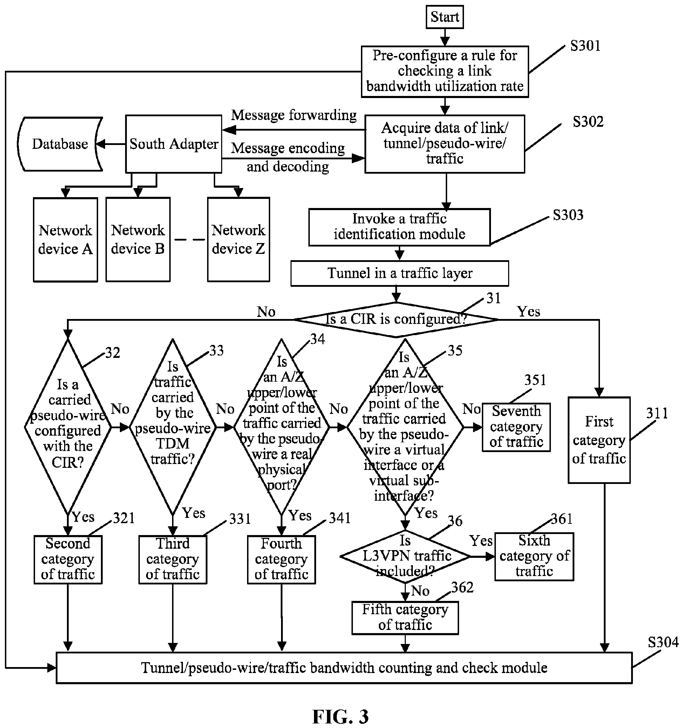

In the embodiment of the present application, as shown in FIG. 3, in step 300, the step of determining whether the traffic is one of the preset traffic categories includes steps described below.

In step 31, it is determined whether a tunnel in a traffic layer is configured with the CIR.

In step 311, in response to determining that the tunnel in the traffic layer is configured with the CIR, the traffic is determined to be the first category of traffic.

In step 32, in response to determining that the tunnel in the traffic layer is configured with no CIR, it is determined whether a carried pseudo-wire is configured with the CIR.

In step 321, in response to determining that the carried pseudo-wire is configured with the CIR, the traffic is determined to be the second category of traffic.

In step 33, in response to determining that the carried pseudo-wire is configured with no CIR, it is determined whether traffic carried by the pseudo-wire is the TDM traffic.

In step 331, in response to determining that the traffic carried by the pseudo-wire is the TDM traffic, the traffic is determined to be the third category of traffic.

In step 34, in response to determining that the traffic carried by the pseudo-wire is not the TDM traffic, it is determined whether an A or Z upper/lower point of the traffic carried by the pseudo-wire is the real physical port.

In step 341, in response to determining that the A or Z upper/lower point of the traffic carried by the pseudo-wire is the real physical port, the traffic is determined to be the fourth category of traffic.

In step 35, in response to determining that the A or Z upper/lower point of the traffic carried by the pseudo-wire is not the real physical port, it is determined whether the A or Z upper/lower point of the traffic carried by the pseudo-wire is the virtual interface or the virtual sub-interface.

In step 3 51, in response to determining that the A or Z upper/lower point of the traffic carried by the pseudo-wire is not the virtual interface or the virtual sub-interface, the traffic is determined to be the seventh category of traffic.

In step 36, in response to determining that the A or Z upper/lower point of the traffic carried by the pseudo-wire is the virtual interface or the virtual sub-interface, it is determined whether the user tag of the associated L3VPN traffic includes the set value.

In step 361, in response to determining that the user tag of the associated L3VPN traffic includes the set value, the traffic is determined to be the sixth category of traffic.

In step 362, in response to determining that the user tag of the associated L3VPN traffic does not include the set value, the traffic is determined to be the fifth category of traffic.

In the embodiment of the present application, the method further includes a step described below.

In step 100, a rule for checking the link bandwidth utilization rate is set before the link bandwidth utilization rate is calculated.

The pre-configured bandwidth check rule includes at least one of: a bandwidth occupied by 2G traffic, a bandwidth occupied by 3G traffic, a bandwidth occupied by 4G traffic, a bandwidth occupation threshold, a user tag for monitoring the layer 3 VPN traffic, or a clock/time synchronization hop count threshold.

In the embodiment of the present application, the step in which the link bandwidth utilization rate is calculated according to the pre-configured bandwidth check rule and the determined traffic category includes: calculating an accumulated value of occupied bandwidths of at least one traffic category corresponding to the pre-configured bandwidth check rule among the first category of traffic, the second category of traffic, the third category of traffic, the fourth category of traffic, and the fifth category of traffic, and calculating, according to the accumulated value of occupied bandwidths and a total bandwidth, the link bandwidth utilization rate; where a bandwidth occupied by the third category of traffic is a number of pieces of traffic for the third category of traffic multiplied by the bandwidth occupied by 2G traffic, a bandwidth occupied by the fourth category of traffic is a number of pieces of traffic for the fourth category of traffic multiplied by the bandwidth occupied by 3G traffic, and a bandwidth occupied by the fifth category of traffic is a number of pieces of traffic for the fifth category of traffic multiplied by the bandwidth occupied by 4G traffic.

In a case where the traffic category that requires counting may be determined according to the pre-configured bandwidth check rule, in a process of counting the numbers of pieces of traffic for the traffic categories in step 300, the number of the traffic categories that require the number of pieces of traffic to be counted is counted. If the pre-configured bandwidth check rule includes the bandwidth occupied by 2G traffic, the corresponding traffic category that requires the number of pieces of traffic to be counted is the third category of traffic. If the pre-configured bandwidth check rule includes the bandwidth occupied by 3G traffic, the corresponding traffic category that requires the number of pieces of traffic to be counted is the fourth category of traffic. If the pre-configured bandwidth check rule includes the bandwidth occupied by 4G traffic, the corresponding traffic category that requires the number of pieces of traffic to be counted is the fifth category of traffic. If the pre-configured bandwidth check rule is a combination of two or three of the bandwidth occupied by 2G traffic, the bandwidth occupied by 3G traffic, and the bandwidth occupied by 4G traffic, the traffic category that requires the number of pieces of traffic to be counted is a corresponding combination of the traffic categories that require the number of pieces of traffic to be counted described above. In addition, according to a network configuration, such as configurations of the tunnel and the pseudo-wire, the number of the traffic categories that require the number of pieces of traffic to be counted further includes 0, 1, or 2 of the first category of traffic and the second category of traffic.

According to the preceding rule, for example, in a case where the pre-configured bandwidth check rule includes the bandwidth occupied by 2G traffic and the bandwidth occupied by 3G traffic, it is determined that the traffic categories that require the number of pieces of traffic to be counted are the first category of traffic, the second category of traffic, the third category of traffic, and the fourth category of traffic.

In the embodiment of the present application, the method further includes step 500 in which after the link bandwidth utilization rate is acquired, a check report is generated according to the acquired link bandwidth utilization rate and outputted.

In the embodiment of the present application, in step 100, the rule for checking the link bandwidth utilization rate is configured through a link bandwidth utilization rate check rule pre-configuration module.

The pre-configured bandwidth check rule includes at least one of: the bandwidth occupied by 2G traffic (in units of M), the bandwidth occupied by 3G traffic (in units of M), the bandwidth occupied by 4G traffic (in units of M), the user tag for monitoring the layer 3 VPN traffic, a threshold for checking the link bandwidth utilization rate, or the clock/time synchronization hop count threshold.

In step 200, a network apparatus to be checked is selected, a check task is selected, and an automatic check is started to be performed. A device acquires data of links, tunnels, pseudo-wires, and traffic related to a corresponding apparatus through a link/tunnel/pseudo-wire/traffic acquisition module.

The link/tunnel/pseudo-wire/traffic acquisition module is further configured to check whether the network includes an apparatus that does not support a clock/time function and a corresponding printed circuit board or port.

In step 300, a traffic identification module classifies obtained tunnels, pseudo-wires, and traffic. As an example, the method further includes checking whether nodes in the network lack a master or backup clock source configuration.

In step 400, according to a classification result, a tunnel/pseudo-wire/traffic bandwidth counting and check module counts traffic bandwidths carried on related links, and check results are calculated according to the pre-configured check rule.

In step 500, a check report generation module summarizes check data from check modules to generate and output an evaluation report.

A description is provided below in conjunction with a specific implementation scenario.

FIG. 2 is a flowchart of a method for acquiring a link bandwidth utilization rate according to an embodiment of the present application.

In S201, a user selects a network apparatus to be checked and a check task then starts a device, and finishes pre-configuring a rule for checking the link bandwidth utilization rate through a link bandwidth utilization rate check rule pre-configuration module.

In S202, after the rule for checking the link bandwidth utilization rate is pre-configured, the device acquires configuration data of related links, tunnels, pseudo-wires, and traffic through a link/tunnel/pseudo-wire/traffic acquisition module.

In S203, after data of the related links, tunnels, pseudo-wires, and traffic is acquired, the device classifies tunnels, pseudo-wires, and traffic carried on each link through a traffic identification module. Specifically, it is determined whether a tunnel in a traffic layer is configured with a CIR; in response to determining that the tunnel in a traffic layer is configured with the CIR, the traffic is determined to be a first category of traffic; in response to determining that the tunnel in a traffic layer is configured with no CIR, it is determined whether a carried pseudo-wire is configured with the CIR; in response to determining that the carried pseudo-wire is configured with the CIR, the traffic is determined to be a second category of traffic; in response to determining that the carried pseudo-wire is configured with no CIR, it is determined whether traffic carried by the pseudo-wire is TDM traffic; in response to determining that the traffic carried by the pseudo-wire is the TDM traffic, the traffic is determined to be a third category of traffic; in response to determining that the traffic carried by the pseudo-wire is not the TDM traffic, it is determined whether an A or Z upper/lower point of the traffic carried by the pseudo-wire is a real physical port; in response to determining that the A or Z upper/lower point of the traffic carried by the pseudo-wire is the real physical port, the traffic is determined to be a fourth category of traffic; in response to determining that the A or Z upper/lower point of the traffic carried by the pseudo-wire is not the real physical port, it is determined whether the A or Z upper/lower point of the traffic carried by the pseudo-wire is a virtual interface or a virtual sub-interface; in response to determining that the A or Z upper/lower point of the traffic carried by the pseudo-wire is not the virtual interface or the virtual sub-interface, the traffic is determined to be a seventh category of traffic; in response to determining that the A or Z upper/lower point of the traffic carried by the pseudo-wire is the virtual interface or the virtual sub-interface, it is determined whether the user tag of the associated L3VPN traffic includes the set value; in response to determining that the user tag of the associated L3VPN traffic includes the set value, the traffic is determined to be a sixth category of traffic; and in response to determining that the user tag of the associated L3VPN traffic does not include the set value, the traffic is determined to be a fifth category of traffic.

In S204, after traffic identification is completed, bandwidths of the classified traffic are counted and the corresponding link bandwidth utilization rate is calculated and checked through a tunnel/pseudo-wire/traffic bandwidth counting and check module in conjunction with the pre-configured rule for checking the link bandwidth utilization rate.

In S205, after the link bandwidth utilization rate is calculated and checked, a system reads check data, and generates and outputs a check report.

At this point, a process of checking the link bandwidth utilization rate based on checks ends.

FIG. 3 is a flowchart of a method for acquiring a link bandwidth utilization rate according to an embodiment of the present application.

As shown in FIG. 3, an example in which a communication network operator practically checks the link bandwidth utilization rate in a network by use of the device is used.

In S301, a user starts a device for checking a network bandwidth utilization rate, selects a network element to be checked (which is a network-wide network apparatus here), determines that an evaluation task to be performed is a "check of the link bandwidth utilization rate", and inputs a bandwidth occupied by 2G traffic (in units of M), a bandwidth occupied by 3G traffic (in units of M), a bandwidth occupied by 4G traffic (in units of M), a user tag for monitoring layer 3 VPN traffic, and a threshold for checking the link bandwidth utilization rate to complete a pre-configuration of a rule for checking the link bandwidth utilization rate.

In S302, the device automatically acquires data of link/tunnel/pseudo-wire/traffic of the operator's network (which is the entire network here).

In S303, after the data of link/tunnel/pseudo-wire/traffic is acquired, the device invokes a traffic identification module to classify the data of link/tunnel/pseudo-wire/traffic. A total of seven traffic categories for counting are identified: traffic for which a tunnel in a service layer is configured with a tunnel CIR (i.e., a first category of traffic), traffic for which the tunnel in the service layer is not configured with the CIR, and a corresponding pseudo-wire is configured with a pseudo-wire CIR (i.e., a second category of traffic), TDM traffic for which neither the tunnel in the service layer nor the pseudo-wire in the service layer is configured with the CIR (i.e., a third category of traffic), Ethernet traffic for which an A or Z endpoint of pseudo-wire/a tunnel in a service layer which are not configured with CIRs is a real physical port (i.e., a fourth category of traffic), Ethernet traffic for which the A or Z endpoint of pseudo-wire/a tunnel in a service layer which are not configured with CIRs is a virtual interface or a virtual sub-interface, wherein the Ethernet traffic associates with layer 3 virtual private network, L3VPN, traffic having a user tag not including a set value (i.e., a fifth category of traffic), Ethernet traffic for which the A or Z endpoint of pseudo-wire/a tunnel in a service layer which are not configured with CIRs is the virtual interface or the virtual sub-interface, wherein the Ethernet traffic associates with L3VPN traffic having a user tag including a set value (i.e., a sixth category of traffic), and other traffic for which neither the tunnel in the service layer nor the pseudo-wire in the service layer is configured with the CIR (i.e., a seventh category of traffic).

In S304, after traffic identification is completed, the device invokes a tunnel/pseudo-wire/traffic bandwidth counting and check module to count bandwidths occupied by the seven traffic categories respectively. For the traffic for which the tunnel in the service layer is configured with the tunnel CIR, a link bandwidth is the configured tunnel CIR. For the traffic for which the tunnel in the service layer is not configured with the CIR, and the corresponding pseudo-wire is configured with the pseudo-wire CIR, the link bandwidth is the pseudo-wire CIR. For the TDM traffic for which neither the tunnel in the service layer nor the pseudo-wire in the service layer is configured with the CIR, counting is performed according to a 2G traffic bandwidth. For the Ethernet traffic for which the A or Z endpoint of the pseudo-wire/the tunnel in the service layer which are not configured with the CIRs is the real physical port, counting is performed according to a 3G traffic bandwidth. For the Ethernet traffic for which the A or Z point of the pseudo-wire/the tunnel in the service layer which are not configured with CIRs is the virtual interface or the virtual sub-interface, wherein the Ethernet traffic associates with layer 3 virtual private network, L3VPN, traffic having the user tag not including the set value, counting is performed according to a 4G traffic bandwidth. For the Ethernet traffic for which the A or Z endpoint of the pseudo-wire/the tunnel in the service layer which are not configured with CIRs is the virtual interface or the virtual sub-interface, wherein the Ethernet traffic associates with L3VPN traffic having the user tag including the set value, bandwidth counting is not performed. For the other traffic for which neither the tunnel in the service layer nor the pseudo-wire in the service layer is configured with the CIR, bandwidth counting is not performed. A sum of results after the counting is calculated according to a corresponding relation of traffic carried on links to obtain a bandwidth occupied by traffic on each link, and the link bandwidth utilization rate is further calculated. The bandwidth utilization rate is compared with a threshold in a link bandwidth utilization rate rule pre-configuration module to obtain a check result of normality or abnormality.

In S304, a system reads check results, and generates and outputs an evaluation report.

At this point, operations of counting and checking the link bandwidth utilization rate of a certain operator are completed.

The following description is provided in conjunction with another specific example.

In a pre-configured check rule, a bandwidth occupied by 2G traffic, a bandwidth occupied by 3G traffic, and a bandwidth occupied by 4G traffic are 2M, 8M, and 40M, respectively.

In a traffic identification process, the number of pieces of traffic for a first category of traffic, a second category of traffic, a third category of traffic, a fourth category of traffic, and a fifth category of traffic is 20, 50, 40, 50, and 60, respectively.

A bandwidth occupied by the first category of traffic is 20M, where the bandwidth is determined according to an actual configuration parameter of a lower gateway. The 20 pieces of traffic may occupy different bandwidths. In this embodiment, an example in which the 20 pieces of traffic occupy a bandwidth of 20M is used for description. A bandwidth occupied by the second category of traffic is 50M, where the bandwidth is determined according to the actual configuration parameter of the lower gateway. The 50 pieces of traffic may occupy different bandwidths. In this embodiment, an example in which the 50 pieces of traffic occupy a bandwidth of 50M is used for description.

A bandwidth occupied by the third category of traffic is 2M^{∗}40=80M.

A bandwidth occupied by the fourth category of traffic is 8M^{∗}50=400M.

A bandwidth occupied by the third category of traffic is 40M^{∗}60=2400M.

Therefore, a total bandwidth occupied is 20M+50M+80M+400M+2400M=2950M.

In response to a total link bandwidth being 10000M, an occupation rate is 29.5%. In response to a threshold being 50%, it does not exceed the threshold. It is to be noted that other thresholds may also be set.

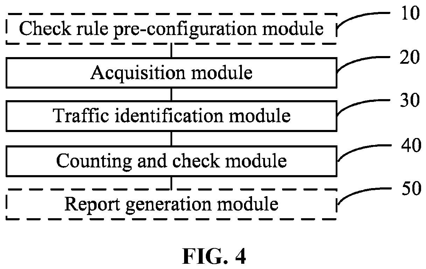

Based on a concept same as or similar to that of the embodiments described above, an embodiment of the present application further provides a device for acquiring a link bandwidth utilization rate. As shown in FIG. 4, the device includes an acquisition module 20, a traffic identification module 30, and a counting and check module 40.

The acquisition module 20 is configured to acquire traffic data in a link.

The traffic identification module 30 is configured to determine, according to the traffic data, a traffic category of traffic.

The counting and check module 40 is configured to calculate, according to a pre-configured bandwidth check rule and the traffic category which is determined by the traffic identification module 30, the link bandwidth utilization rate.

In the embodiment of the present application, the traffic identification module 30 is configured to determine whether the traffic is one of preset traffic categories, and count a number of pieces of traffic for the traffic category, where the preset traffic categories include at least one of categories described below.

A first category of traffic represents traffic for which a tunnel in a service layer is configured with a tunnel CIR.

A second category of traffic represents traffic for which the tunnel in a service layer is not configured with the CIR, and a corresponding pseudo-wire is configured with a pseudo-wire CIR.

A third category of traffic represents TDM traffic for which neither the tunnel in a service layer nor the pseudo-wire in a service layer is configured with the CIR.

A fourth category of traffic is Ethernet traffic for which an A or Z endpoint of pseudo-wire/a tunnel in a service layer which are not configured with CIRs is a real physical port.

A fifth category of traffic represents Ethernet traffic for which an A or Z endpoint of a pseudo-wire/a tunnel in a service layer which are not configured with CIRs is a virtual interface or a virtual sub-interface, wherein the Ethernet traffic associates with layer 3 virtual private network, L3VPN, traffic having a user tag not including a set value.

A sixth category of traffic represents Ethernet traffic for which an A or Z endpoint of a pseudo-wire/a tunnel in a service layer which are not configured with CIRs is a virtual interface or a virtual sub-interface, wherein the Ethernet traffic associates with L3VPN traffic having a user tag including a set value.

A seventh category of traffic represents other traffic for which neither the tunnel in a service layer nor a pseudo-wire in a service layer is configured with the CIR.

In the embodiment of the present application, the traffic identification module 30 is configured to: determine whether a tunnel in a traffic layer is configured with the CIR; in response to determining that the tunnel on a traffic layer is configured with the CIR, determine the traffic to be the first category of traffic; in response to determining that the tunnel on a traffic layer is configured with no CIR, determine whether a carried pseudo-wire is configured with the CIR; in response to determining that the carried pseudo-wire is configured with the CIR, determine the traffic to be the second category of traffic; in response to determining that the carried pseudo-wire is configured with no CIR, determine whether traffic carried by the pseudo-wire is the TDM traffic; in response to determining that the traffic carried by the pseudo-wire is the TDM traffic, determine the traffic to be the third category of traffic; in response to determining that the traffic carried by the pseudo-wire is not the TDM traffic, determine whether an A or Z upper/lower point of the traffic carried by the pseudo-wire is the real physical port; in response to determining that the A or Z upper/lower point of the traffic carried by the pseudo-wire is the real physical port, determine the traffic to be the fourth category of traffic; in response to determining that the A or Z upper/lower point of the traffic carried by the pseudo-wire is not the real physical port, determine whether the A or Z upper/lower point of the traffic carried by the pseudo-wire is the virtual interface or the virtual sub-interface; in response to determining that the A or Z upper/lower point of the traffic carried by the pseudo-wire is not the virtual interface or the virtual sub-interface, determine the traffic to be the seventh category of traffic; in response to determining that the A or Z upper/lower point of the traffic carried by the pseudo-wire is the virtual interface or the virtual sub-interface, determine whether the user tag of the associated L3VPN traffic includes the set value; in response to determining that the user tag of the associated L3VPN traffic includes the set value, determine the traffic to be the sixth category of traffic; and in response to determining that the user tag of the associated L3VPN traffic does not include the set value, determine the traffic to be the fifth category of traffic.

In the embodiment of the present application, the device further includes a check rule pre-configuration module 10, which is configured to set a rule for checking the link bandwidth utilization rate. The bandwidth check rule includes at least one of: a bandwidth occupied by 2G traffic, a bandwidth occupied by 3G traffic, a bandwidth occupied by 4G traffic, a bandwidth occupation threshold, or a user tag for monitoring the layer 3 VPN traffic.

In the embodiment of the present application, the counting and check module 40 is configured to calculate an accumulated value of occupied bandwidths of at least one traffic category corresponding to the pre-configured bandwidth check rule among the first category of traffic, the second category of traffic, the third category of traffic, the fourth category of traffic, and the fifth category of traffic, and calculate, according to the accumulated value of occupied bandwidths and a total bandwidth, the link bandwidth utilization rate; where a bandwidth occupied by the third category of traffic is a number of pieces of traffic for the third category of traffic multiplied by the bandwidth occupied by 2G traffic, a bandwidth occupied by the fourth category of traffic is a number of pieces of traffic for the fourth category of traffic multiplied by the bandwidth occupied by 3G traffic, and a bandwidth occupied by the fifth category of traffic is a number of pieces of traffic for the fifth category of traffic multiplied by the bandwidth occupied by 4G traffic.

In the embodiment of the present application, the device further includes a report generation module 50, which is configured to: after the link bandwidth utilization rate is acquired, generate and output a check report according to the acquired link bandwidth utilization rate and output the check report.

A description is provided below in conjunction with a specific implementation scenario.

It is to be noted that when the information warning device provided by the above-mentioned embodiment performs information warning, an exemplary description is provided only by the division of the program modules described above, and in practical applications, the processing described above may be distributed and performed by different program modules according to needs, that is, the internal structure of the device is divided into different program modules to perform all or part of the processing described above. In addition, the information warning device in the above-mentioned embodiment has a same concept as the embodiments of the information warning method, and for a specific implementation process, reference is made to the method embodiment and repetition is not made herein.

In the embodiment of the present application, a device for checking a link bandwidth utilization rate includes 5 functional modules in total. A link bandwidth utilization rate check rule pre-configuration module pre-configures a rule, where the pre-configured rule includes a bandwidth occupied by 2G traffic (in units of M), a bandwidth occupied by 3G traffic (in units of M), a bandwidth occupied by 4G traffic (in units of M), a user tag for monitoring layer 3 VPN traffic, a threshold for checking the link bandwidth utilization rate, and a clock/time synchronization hop count threshold. A link/tunnel/pseudo-wire/traffic acquisition module is configured to check whether a network includes an apparatus that does not support a clock/time function and a corresponding printed circuit board or port. A traffic identification module is configured to check whether a clock/time synchronization hop count of each node in the network is excessive. A tunnel/pseudo-wire/traffic bandwidth counting and check module is configured to check whether each node in the network lacks a master or backup clock source configuration. A check report generation module is configured to summarize check data from modules to generate and output a check report.

Based on a concept same as or similar to that of the embodiments described above, an embodiment of the present application further provides a terminal, including a memory, a processor, and a computer program stored in the memory and executable on the processor, where the processor, when executing the computer program, implements steps of any one method for acquiring link bandwidth utilization rate according to the embodiments of the present application.

It is understandable that the memory may be a volatile memory or a non-volatile memory or may include both the volatile memory and the non-volatile memory. The non-volatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk or a compact disc read-only memory (CD-ROM). The magnetic surface memory may be a magnetic disk memory or a magnetic tape memory. The volatile memory may be a random access memory (RAM), which serves as an external cache. By way of illustration but not limitation, many forms of RAMs may be used, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a SyncLink dynamic random access memory (SLDRAM), and a direct Rambus random access memory (DRRAM). The memory described in the embodiments of the present invention is intended to include, but is not limited to, these and any other suitable category of memory.

The methods disclosed by the embodiments of the present invention may be applied to the processor or may be implemented by the processor. The processor may be an integrated circuit chip with signal processing capabilities. In the implementation process, various steps in the preceding methods may be performed by an integrated logic circuit of hardware or software instructions in the processor. The processor described above may be a general-purpose processor, a digital signal processor (DSP), or another programmable logic device, discrete gate or transistor logic device, another discrete hardware component, or the like. The processor may implement or execute various methods, steps and logic block diagrams disclosed by the embodiments of the present invention. The general-purpose processor may be a microprocessor or any conventional processor. The steps of the methods disclosed by the embodiments of the present invention may be directly implemented by a hardware decoding processor, or may be implemented by a combination of hardware and software modules in the decoding processor. The software modules may be located in a storage medium located in the memory. The processor reads information in the memory and implements the steps of the preceding methods in combination with hardware of the processor.

In an exemplary embodiment, the device for acquiring a link bandwidth utilization rate may be implemented by one or more application specific integrated circuits (ASICs), DSPs, programmable logic devices (PLDs), complex programmable logic devices (CPLDs), field-programmable gate arrays (FPGAs), general-purpose processors, controllers, micro controller units (MCUs), microprocessors, or other electronic elements for executing the preceding methods.

Based on a concept same as or similar to that of the embodiments described above, an embodiment of the present application further provides a computer-readable storage medium, storing a computer program thereon, where the computer program, when executed by a processor, implements steps of any one method for acquiring a link bandwidth utilization rate according to the embodiments of the present application.

It should be understood that the devices and the methods disclosed in the embodiments of the present application may be implemented in other manners. The apparatus embodiments described above are only illustrative. For example, the division of units is only a division of logical functions, and, in practice, the division of units may be implemented in other manners. For example, multiple units or components may be combined or may be integrated into another system, or some features may be omitted or not executed. In addition, coupling, direct coupling or communication connections between the presented or discussed components may be indirect coupling or communication connections, via interfaces, between apparatuses or units, and may be electrical, mechanical or in other forms.

The units described above as separate components may or may not be physically separated. Components presented as units may or may not be physical units, that is, may be located in one place or may be distributed over multiple network units. Part or all of these units may be selected according to practical needs to achieve the objects of the solutions in the embodiments of the present application.

Moreover, various functional units in the embodiments of the present application may all be integrated in one processing unit, or each unit may be used as a separate unit, or two or more units may be integrated into one unit. The integrated unit may be implemented by hardware or may be implemented by hardware plus a software functional unit.

It is understandable by those skilled in the art that all or part of the steps in the method embodiments described above may be implemented by hardware related to program instructions, and the preceding program may be stored in a computer-readable storage medium, and, when executed, the program executes steps including the method embodiments described above. The preceding storage medium includes various media capable of storing program codes, such as a mobile storage apparatus, a ROM, a RAM, a magnetic disk, or an optical disk.

Alternatively, the preceding integrated unit in the present application may also be stored in the computer-readable storage medium if implemented in the form of a software functional module and sold or used as an independent product. Based on this understanding, the technical solutions provided by the embodiments of the present application substantially, or the part contributing to the existing art, may be embodied in the form of a software product. The computer software product is stored in a storage medium and includes several instructions for enabling a computer apparatus (which may be a personal computer, a server or a network apparatus, etc.) to execute all or part of the methods provided by the various embodiments of the present application. The preceding storage medium includes various media capable of storing program codes, such as a mobile storage apparatus, a ROM, a RAM, a magnetic disk, or an optical disk.

The above are only specific embodiments of the present application and are not intended to limit the scope of the present application. Any modifications or substitutions easily conceivable to those skilled in the art within the technical scope disclosed by the present application should fall within the scope of the present application. Therefore, the scope of the present application is subject to the scope of the appended claims.

## Claims

1. A method for acquiring a link bandwidth utilization rate, comprising:
acquiring traffic data in a link;
determining, according to the traffic data, a traffic category of traffic; and
calculating, according to a pre-configured bandwidth check rule and the determined traffic category, the link bandwidth utilization rate.

2. The method for acquiring the link bandwidth utilization rate of claim 1, wherein determining, according to the traffic data, the traffic category of the traffic comprises:
determining whether the traffic is one of preset traffic categories, and counting a number of pieces of traffic under the traffic category;
wherein the preset traffic categories comprise at least one of:
a first category of traffic, representing traffic for which a tunnel in a service layer is configured with a tunnel committed information rate, CIR;
a second category of traffic, representing traffic for which a tunnel in a service layer is not configured with a CIR and a corresponding pseudo-wire is configured with a pseudo-wire CIR;
a third category of traffic, representing time division multiplexing, TDM, traffic for which neither a tunnel in a service layer nor a pseudo-wire in a service layer is configured with a CIR;
a fourth category of traffic, representing Ethernet traffic for which an A/Z endpoint of pseudo-wire/a tunnel in a service layer which are not configured with CIRs is a real physical port;
a fifth category of traffic, representing Ethernet traffic for which an A or Z endpoint of a pseudo-wire/a tunnel in a service layer which are not configured with CIRs is a virtual interface or a virtual sub-interface, wherein the Ethernet traffic associates with layer 3 virtual private network, L3VPN, traffic having a user tag not including a set value;
a sixth category of traffic, representing Ethernet traffic for which an A/Z endpoint of a pseudo-wire/a tunnel in a service layer which are not configured with CIRs is a virtual interface or a virtual sub-interface, wherein the Ethernet traffic associates with L3VPN traffic having a user tag including a set value; or
a seventh category of traffic, representing other traffic for which neither a tunnel in a service layer nor a pseudo-wire in a service layer is configured with a CIR.

3. The method for acquiring the link bandwidth utilization rate of claim 2, wherein determining whether the traffic is one of the preset traffic categories comprises:
determining whether a tunnel in a traffic layer is configured with the CIR;
in response to determining that the tunnel in the traffic layer is configured with the CIR, determining the traffic to be the first category of traffic;
in response to determining that the tunnel in the traffic layer is configured with no CIR, determining whether a carried pseudo-wire is configured with the CIR;
in response to determining that the carried pseudo-wire is configured with the CIR, determining the traffic to be the second category of traffic;
in response to determining that the carried pseudo-wire is configured with no CIR, determining whether traffic carried by the pseudo-wire is the TDM traffic;
in response to determining that the traffic carried by the pseudo-wire is the TDM traffic, determining the traffic to be the third category of traffic;
in response to determining that the traffic carried by the pseudo-wire is not the TDM traffic, determining whether an A or Z upper/lower point of the traffic carried by the pseudo-wire is the real physical port;
in response to determining that the A or Z upper/lower point of the traffic carried by the pseudo-wire is the real physical port, determining the traffic to be the fourth category of traffic;
in response to determining that the A or Z upper/lower point of the traffic carried by the pseudo-wire is not the real physical port, determining whether the A or Z upper/lower point of the traffic carried by the pseudo-wire is the virtual interface or the virtual sub-interface;
in response to determining that the A or Z upper/lower point of the traffic carried by the pseudo-wire is not the virtual interface or the virtual sub-interface, determining the traffic to be the seventh category of traffic;
in response to determining that the A or Z upper/lower point of the traffic carried by the pseudo-wire is the virtual interface or the virtual sub-interface, determining whether the user tag of the associated L3VPN traffic includes the set value;
in response to determining that the user tag of the associated L3VPN traffic includes the set value, determining the traffic to be the sixth category of traffic; and
in response to determining that the user tag of the associated L3VPN traffic does not include the set value, determining the traffic to be the fifth category of traffic.

4. The method for acquiring the link bandwidth utilization rate of any one of claims 1 to 3, further comprising: setting a rule for checking the link bandwidth utilization rate before the link bandwidth utilization rate is calculated;
wherein the pre-configured bandwidth check rule comprises at least one of:
a bandwidth occupied by 2G traffic, a bandwidth occupied by 3G traffic, a bandwidth occupied by 4G traffic, a bandwidth occupation threshold, a user tag for monitoring the layer 3 VPN traffic, or a clock/time synchronization hop count threshold.

5. The method for acquiring the link bandwidth utilization rate of claim 4, wherein calculating, according to the pre-configured bandwidth check rule and the determined traffic category, the link bandwidth utilization rate comprises:
calculating an accumulated value of occupied bandwidths of at least one traffic category corresponding to the pre-configured bandwidth check rule among the first category of traffic, the second category of traffic, the third category of traffic, the fourth category of traffic, and the fifth category of traffic, and calculating, according to the accumulated value of occupied bandwidths and a total bandwidth, the link bandwidth utilization rate; wherein a bandwidth occupied by the third category of traffic is a number of pieces of traffic of the third category of traffic multiplied by the bandwidth occupied by 2G traffic, a bandwidth occupied by the fourth category of traffic is a number of pieces of traffic of the fourth category of traffic multiplied by the bandwidth occupied by 3G traffic, and a bandwidth occupied by the fifth category of traffic is a number of pieces of traffic of the fifth category of traffic multiplied by the bandwidth occupied by 4G traffic.

6. The method for acquiring the link bandwidth utilization rate of claim 4, further comprising:
after the link bandwidth utilization rate is acquired, generating a check report according to the acquired link bandwidth utilization rate and outputting the check report.

7. A device for acquiring a link bandwidth utilization rate, comprising:
an acquisition module, which is configured to acquire traffic data in a link;
a traffic identification module, which is configured to determine, according to the traffic data, a traffic category of traffic; and
a counting and check module, which is configured to calculate, according to a pre-configured bandwidth check rule and the traffic category determined by the traffic identification module, the link bandwidth utilization rate.

8. The device for acquiring the link bandwidth utilization rate of claim 7, wherein the traffic identification module is configured to determine whether the traffic is one of preset traffic categories, and count a number of pieces of traffic under the traffic category, wherein the preset traffic categories comprise at least one of:
a first category of traffic, representing traffic for which a tunnel in a service layer is configured with a tunnel committed information rate, CIR;
a second category of traffic, representing traffic for which a tunnel in a service layer is not configured with a CIR and a corresponding pseudo-wire is configured with a pseudo-wire CIR;
a third category of traffic, representing time division multiplexing, TDM, traffic for which neither a tunnel in a service layer nor a pseudo-wire in a service layer is configured with a CIR;
a fourth category of traffic, representing Ethernet traffic for which an A/Z endpoint of pseudo-wire/a tunnel in a service layer which are not configured with CIRs is a real physical port;
a fifth category of traffic, representing Ethernet traffic for which an A or Z endpoint of a pseudo-wire/a tunnel in a service layer which are not configured with CIRs is a virtual interface or a virtual sub-interface, wherein the Ethernet traffic associates with layer 3 virtual private network, L3VPN, traffic having a user tag not including a set value;
a sixth category of traffic, representing Ethernet traffic for which an A or Z endpoint of a pseudo-wire/a tunnel in a service layer which are not configured with CIRs is a virtual interface or a virtual sub-interface, wherein the Ethernet traffic associates with L3VPN traffic having a user tag including a set value; or
a seventh category of traffic, representing other traffic for which neither a tunnel in a service layer nor pseudo-wire in a service layer is configured with a CIR.

9. The device for acquiring the link bandwidth utilization rate of claim 8, wherein
the counting and check module is configured to calculate an accumulated value of occupied bandwidths of at least one traffic category corresponding to the pre-configured bandwidth check rule among the first category of traffic, the second category of traffic, the third category of traffic, the fourth category of traffic, and the fifth category of traffic, and calculate, according to the accumulated value of occupied bandwidths and a total bandwidth, the link bandwidth utilization rate; wherein a bandwidth occupied by the third category of traffic is a number of pieces of traffic for the third category of traffic multiplied by a bandwidth occupied by 2G traffic, a bandwidth occupied by the fourth category of traffic is a number of pieces of traffic for the fourth category of traffic multiplied by a bandwidth occupied by 3G traffic, and a bandwidth occupied by the fifth category of traffic is a number of pieces of traffic for the fifth category of traffic multiplied by a bandwidth occupied by 4G traffic.

10. A terminal, comprising a memory, a processor, and a computer program stored in the memory and executable by the processor, wherein the processor, when executing the computer program, implements steps of the method of any one of claims 1 to 6.

11. A computer-readable storage medium, storing a computer program, wherein the computer program, when executed by a processor, implements steps of the method of any one of claims 1 to 6.
